# EUROPEAN PATENT SPECIFICATION

(11) **EP 2 212 163 B1**
(45) Date of publication and mention of the grant of the patent: **30.11.2011**
(21) Application number: 07835121.0
(22) Date of filing: 28.11.2007
(51) Int. Cl.: B60R 21/34

(54) **A PEDESTRIAN-PROTECTING AIR BAG ARRANGEMENT AND A METHOD OF FOLDING AND STORING A PEDESTRIAN-PROTECTING AIR BAG ARRANGEMENT**
AIRBAGANORDNUNG ZUM SCHUTZ VON FUSSGÄNGERN UND VERFAHREN ZUM FALTEN UND LAGERN EINER AIRBAGANORDNUNG ZUM SCHUTZ VON FUSSGÄNGERN
DISPOSITIF DE COUSSIN DE SÉCURITÉ GONFLABLE DE PROTECTION DES PIÉTONS ET PROCÉDÉ DE PLIAGE ET DE RANGEMENT D'UN DISPOSITIF DE COUSSIN DE SÉCURITÉ GONFLABLE DE PROTECTION DES PIÉTONS

(43) Date of publication of application: 04.08.2010
(73) Proprietor: Autoliv Development AB, 44783 Vårgårda (SE); Ford Global Technologies, LLC, Dearborn, MI 48126 (US)
(72) Inventor: ÖSTLING, Martin, SE-507 33 Brämhult (SE); ERLINGFORS, Mats, SE-444 65 Jörlanda (SE); WALLMAN, Mattias, SE-432 54 Varberg (SE); HALLNEUS, Gunnar, SE-416 71 Göteborg (SE)
(74) Representative: Beattie, Alex Thomas Stewart
(86) International application number: PCT/SE2007/000920
(87) International publication number: WO 2009/070059

(56) References cited:
- EP-A2- 1 318 054
- JP-A- 2003 252 138
- JP-A- 2003 291 756
- JP-A- 2005 178 587
- JP-A- 2006 069 291

## Description

THIS INVENTION RELATES to an air bag arrangement in a motor vehicle for protecting a pedestrian in the event of the motor vehicle colliding with such pedestrian.

An air bag arrangement of the above character is known in a motor vehicle having a bonnet pivoted at a forward end for pivoting upwardly and forwardly, and which arrangement includes means, such as a first air bag or a piston-operated actuator which, in the event of a collision with a pedestrian, raises the rear end of the bonnet and inflates an air bag or air bags to partially cover the vehicle windscreen and part of the A-pillars of the vehicle. The air bag provides a cushion which minimises the likelihood of the head or torso of the pedestrian striking the windscreen or A-pillars of the vehicle, and thereby the risk of injury to the pedestrian is minimised.

Such an arrangement is known, for example, from EP0967128, in which an air bag has a first cushion portion extending beneath the bonnet to lift the bonnet and a second portion extending out from the rear of the bonnet to cover part of the windscreen and the A-pillars.

A pedestrian-prorecting airbag arrangement according to the preamble of claim 1 is known from JP 2006 069 291A.

It is an object of the present invention to provide an improved pedestrian-protecting air bag arrangement for a motor vehicle, such as a motor car or motor van.

It is another object of the invention to provide such an air bag arrangement in which a single air bag will serve for lifting the rear end of the bonnet and for covering the windscreen and the A-pillars.

According to the invention there is provided a pedestrian-protecting air bag arrangement for a motor vehicle having a bonnet pivoted at a forward end for pivoting upwardly and forwardly, the vehicle having a windscreen behind the bonnet, the arrangement comprising an air bag located beneath the bonnet adjacent a rear end thereof, and substantially mid-way between the vehicle sides, the air bag in its deployed state being elongate transversely and extending across the width of the vehicle bonnet and upwardly over at least part of the height of the windscreen, the air bag comprising a central region with an inlet portion secured to an inflator via an inlet and lateral regions or wings which in said deployed state extend from said central region on either side of said central region and wherein, in the pre-deployed, stowed state, the air bag is packed in a supporting housing or receptacle having a wall adjacent which said inlet and inflator lie and the lateral regions or wings of the air bag are folded or rolled towards the central portion, to lie between said central region of the air bag and said wall whereby, when the air bag is inflated, the folded lateral regions of the air bag lying between said central region and said wall are initially held between the inflating central region and said wall of the housing or receptacle, and/or the inflator, and said rolled or folded lateral regions are thereby temporarily prevented from inflating but are displaced out of said housing or receptacle as the central region of the bag inflates, allowing the lateral regions also to inflate to extend over the windscreen.

Preferably, the air bag has been folded in a sequence in which, starting from an extended un-inflated condition of the air bag, the air bag is first folded or rolled about an axis extending longitudinally of the air bag and which will extend transversely of the vehicle in which the air bag is to be fitted, in such a way that said inlet portion remains exposed, whereby the extent of the air bag perpendicular to said longitudinal axis of the air bag is narrowed, and thereafter each of the thus rolled or folded lateral regions is further rolled or folded about an axis or axes extending perpendicular to said longitudinal axis of the bag in such a way as to bring said rolled or folded lateral regions to lie in superimposed relationship with said central region, on either side of the inlet.

Thus, in preferred embodiments of the invention, the air bag is folded in such a way that some of the folds are locked, initially, during the part of the inflation sequence in which the rear end of the bonnet is lifted, with only a part of the bag, as it inflates, extending upwards to lift the bonnet, and thereafter, the previously locked folded parts are freed to unfold and extend over the windshield and the A-pillars. The lateral folded parts are locked when placed under the centre part of the bag. When the central part of the bag is inflated, it presses the folded lateral parts downwards and thereby locks the latter. After a certain period of time has elapsed, the gas pressure inside the bag exceeds a predetermined pressure and the folded lateral parts start to unfold.

An embodiment of the invention is described below by way of example with reference to the accompanying drawings in which:
Figure 1 is a schematic side view partially in section showing a motor vehicle equipped with an air bag system embodying the invention in a normal un-deployed condition of the air bag,
Figure 2 is a corresponding view showing the air bag deployed; and
Figure 3 is a front view of the vehicle with the air bag deployed.
Figure 4 is a view in section transverse to the longitudinal axis of the vehicle, through the air bag arrangement in the stowed condition,
Figures 5A to 5F are respective diagrammatic views illustrating the folding of the air bag, and
Figures 6A to 6E illustrate a variant folding arrangement.

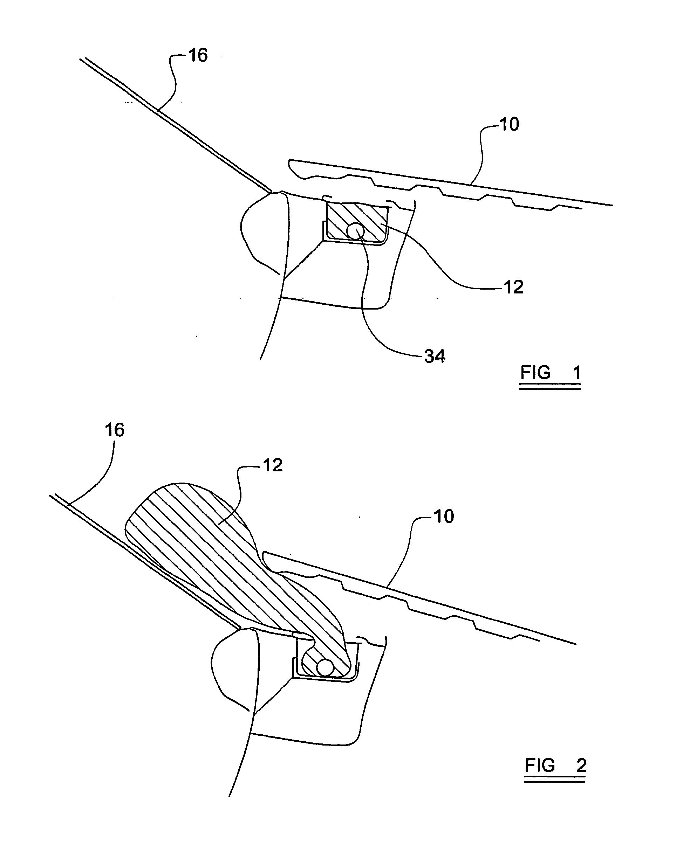

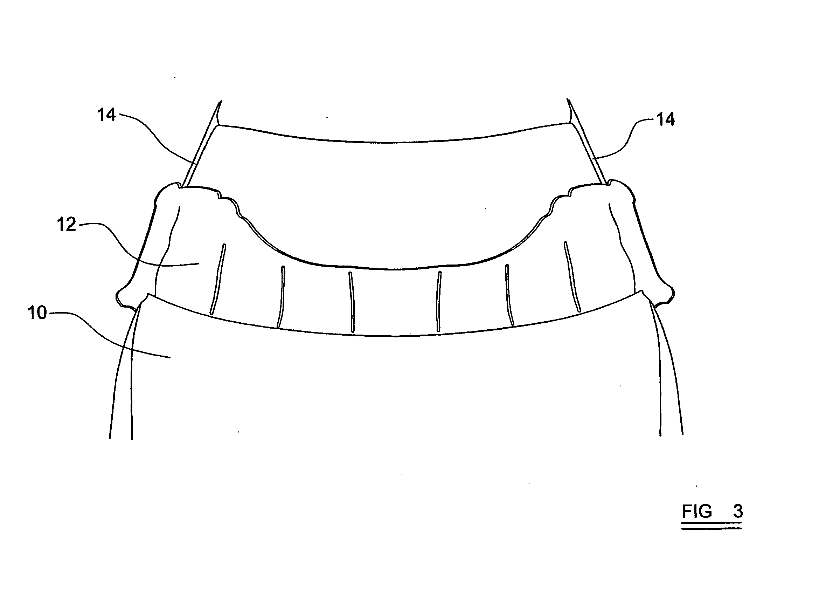

As shown in Figures 1 and 2, a motor vehicle such as a motor car, has a bonnet indicated at 10 which is hingedly mounted at the front of the vehicle engine compartment and is adapted to swing forwardly and upwardly from the rear for access to the engine compartment. The vehicle is equipped with a pedestrian air bag 12 mounted beneath the vehicle bonnet adjacent the rear of the latter, such that the air bag, when activated, will, in a first stage of inflation, lift the bonnet a distance above the engine block of the vehicle to provide protection for a pedestrian impacting the vehicle in an accident situation. The arrangement is such that in a second stage of inflation, portions of the air bag also extend upwardly and laterally from the rear of the bonnet, to cover portions of the windscreen 16 to the sides of the vehicle and also at least the lower parts of the A pillars 14 of the vehicle, as shown in Figure 3. The air bag provides a cushion which minimises the likelihood of injury to the head or torso of a pedestrian striking the windscreen or A pillars of the vehicle or would otherwise do so.

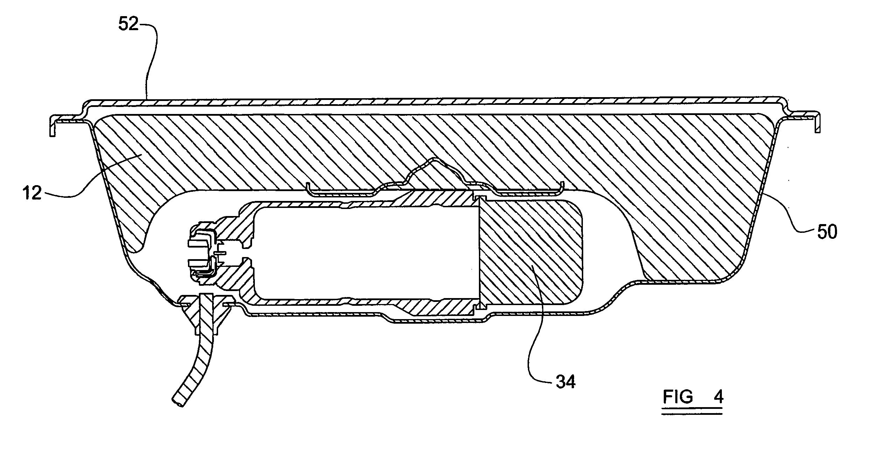

Referring to Figures 1 and 4, the air bag, in its stowed condition, is accommodated, with its associated inflator, in known fashion, in a pan-like steel housing or receptacle 50, the top of the receptacle 50 being covered by a detachable lid 52. The receptacle 50 is secured within the engine compartment of the vehicle at the rear of that compartment, just below the rear end portion of the bonnet and approximately mid-way between the sides of the vehicle.

As explained in detail below, the air bag 12 is folded in such a way that some of the folds are locked, initially, during the part of the inflation sequence in which the rear end of the bonnet is lifted, with only a part of the bag, as it inflates, extending upwards to lift the bonnet, and thereafter, the previously locked folded parts are freed to unfold and extend over the windshield and the A-pillars.

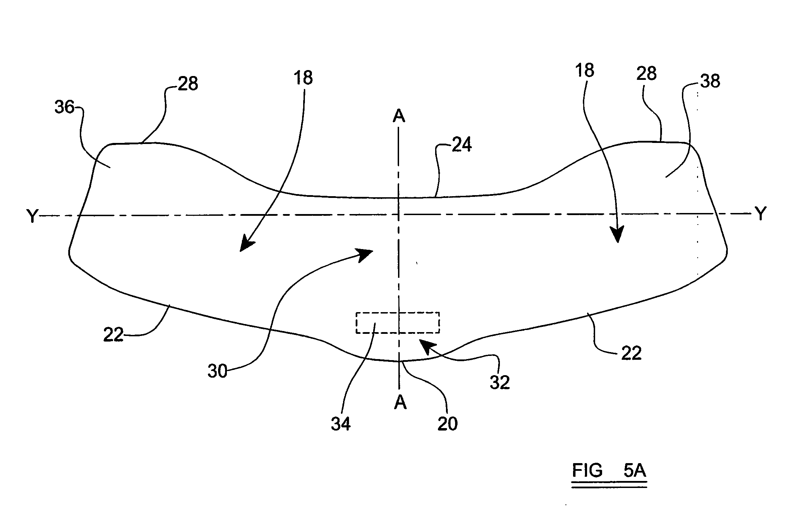

The manner in which the bag is folded or packed is described below with reference to Figures 5A to 5E. Thus, Figure 5A shows the bag, un-inflated, but laid out flat. Thus, the bag effectively comprises two identical or near identical panels of the profile shown in Figure 5A superimposed upon one another and secured together along the edges indicated. As will be noted, the bag comprises a central region 30 which includes an inlet portion 32 which is sealingly secured to an inflator indicated diagrammatically at 34. On either side of the central portion 30 are lateral regions, indicated generally at 18 and which include outer portions 36, 38 which, in the arrangement shown, are somewhat deeper than the central region 30 and are intended, in the deployed condition of the bag, to cover the A-pillars 14 of the vehicle, i.e. the parts of the vehicle frame on either side of the windscreen. Thus, the bag in its extended condition is elongate along an axis Y-Y transversely of the vehicle and the bag in its unfurled flat condition has a form which is generally symmetrical about an axis A-A (Figure 5A) which lies substantially in a fore and aft vertical central plane of the vehicle when the bag is installed and which has a profile such that a lower edge 20, 22 (which is the lower edge in Figure 5A), has a middle region 20, centred on the axis A-A, and which is lowermost in Figure 5A. The lower edge 20, 22 curves upwardly, as edge parts 22, to either side from region 20 away from said axis A-A, these edge parts 22 sloping upwardly in the Figure 5A at a shallow angle from the middle region 20 into the lateral regions 18 of the bag. The upper edge 24 of the bag profile, as viewed in Figure 5A, includes a substantially straight middle portion 26 extending generally perpendicular to the axis A-A and thus parallel to the longitudinal axis Y-Y, and which portion 26 is relatively close to the lower edge middle part 20. The upper edge 24 curves upwards to either side as viewed in Figure 5A to define upper edges 28 of extreme lateral parts 36, 38 of the air bag which are thus of increased depth, as viewed in Figure 5A, as compared with adjacent parts of the air bag and which are intended, in the deployed condition of the air bag, to cover the A-pillars on either side of the vehicle windscreen. The upward inclination, as viewed in Figure 5A, of the parts 22 of the lower edge and the upward extension of parts 36, 38 as viewed in Figure 5A, are provided to some extent to allow for the curvature of the windscreen and rear bonnet edge as viewed in plan.

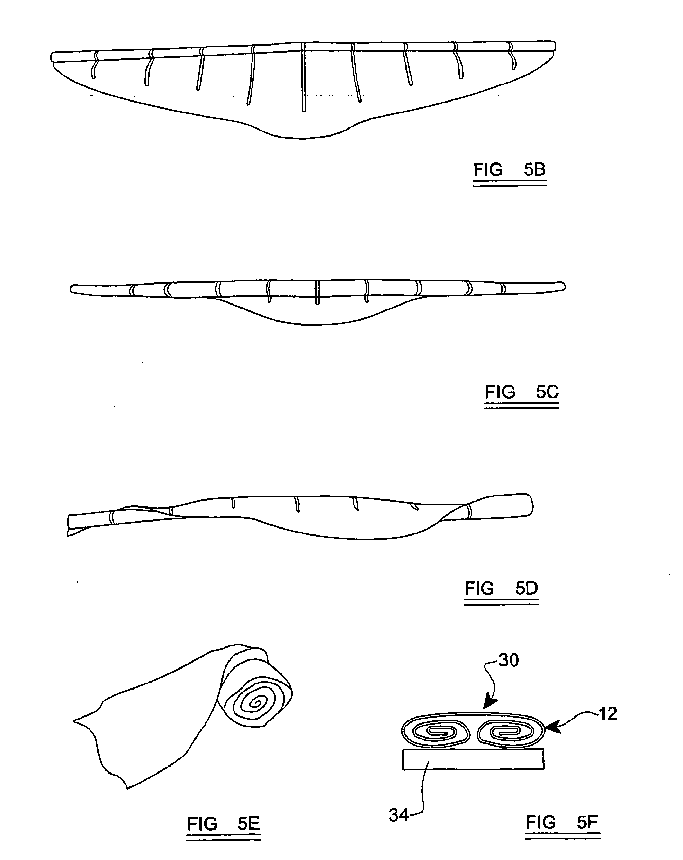

In packing the bag into its container, in a first step, the bag is rolled up from its long upper edge 24 remote from the inflator 34, towards the inflator, as illustrated in Figures 5B and 5C. Thus, at the end of this folding phase, the bag takes the form of a narrow roll which is still of the full lateral width of the extended bag. The rolling thus far is conducted in such a way that the longitudinal roll, and the inflator 34, (or the inflator connection), both lie below the inlet portion 32, (considered with respect to the orientation of the bag when packed in its housing 50 in the vehicle). In a subsequent stage, illustrated in Figures 5D and 5E, the lateral regions of the elongate roll, comprising the laterally outer parts 36, 38, are further rolled up, about axes parallel with axis A-A, so that each lateral region adopts the form of a spiral or scroll in which the parts furthest from the middle of the spiral or scroll extend outwardly and downwardly from the central region 30 of the bag, to curl under the central region 30 between the latter and the inflator, as shown in Figure 5F. The bag thus packed is fitted, with the inflator 34, in the housing or receptacle 50 (see Figure 4) so that each folded or rolled lateral region is contained between the central region 30 and the inflator unit.

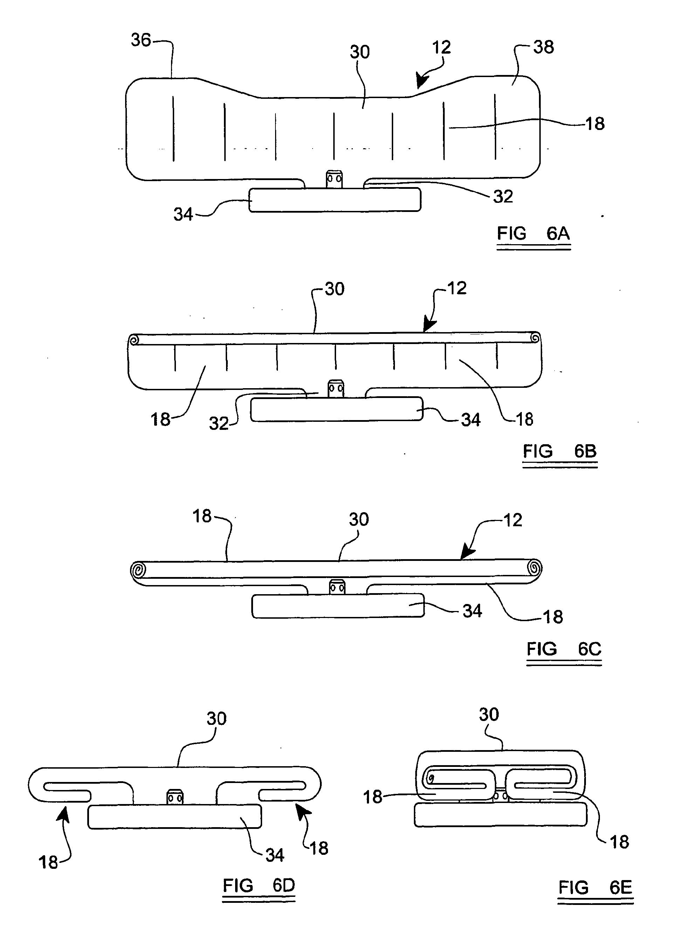

Figures 6A to 6E illustrate more diagrammatically the folding sequence for a similar air bag of slightly different shape. In these figures, Figure 6A again shows the bag in the flat fully extended condition, the inflator being indicated again at 34, with a gas outlet from the inflator, (actually accommodated within the inlet port of the bag) being indicated at 54. Figures 6B and 6C illustrate the progressive rolling up of the bag about its longitudinal axis Y-Y, whilst, as shown in Figure 6D, in the next stage, an outer part of each lateral region, including, for example, the respective part 36,38, is folded under the adjacent part of the bag. In a further stage, shown in Figure 6E, each of said adjacent parts, with the underlying outer part, is folded under the central region 30 of the bag, so that each lateral region of the bag forms a simple flat spiral and is accommodated between the overlying central region 30 of the bag and the underlying inflator 34. The bag/inflator combination is then packed in an air bag housing as described above. It will be appreciated that, in the condition shown in Figures 5F and 6F, the necessary inlet conduit connecting the bag with the inflator extends between the adjoining portions of the left and right outer regions of the folded air bag.

It will be understood that variations in the manner in which the lateral regions of the bag are folded under the central region, and indeed in the manner in which the bag is first reduced in vertical (as viewed in Figures 5A and 6A) dimension are possible to secure desired modifications in air bag behaviour. For example, the bag may folded in concertina fashion rather than rolled to achieve a narrow longitudinal elongate configuration along axis Y-Y, (corresponding to the stage illustrated in figures 5C and 6C), and/or the lateral regions of the bag may be folded in concertina fashion or part rolled/part concertina folded under the central region 30.

With the air bag arrangements described, in the event of the vehicle colliding with a pedestrian, a sensor at the front of the vehicle, e.g. in the front bumper, detects the collision and activates the inflator. The air bag thus begins to inflate, beginning with the region 30 immediately adjacent the bag inlet, causing this region to expand upwardly, raising the rear end of the bonnet from its normal position. Initially, the lateral regions of the air bag are effectively sealed off or locked, being retained in their rolled or folded up condition by being supported, from below, by the receptacle or housing 50 and from above by the overlying central portion 30 of the bag and by bonnet 10. However, as the inflation of the air bag proceeds, the inflation of the central region 30, after or during the lifting of the rear end of the bonnet, lifts the bag and the folded or rolled lateral regions from the receptacle 50, allowing these regions to unroll or unfold to either side whilst the bag also unrolls up the windscreen, i.e. reversing the rolling or folding about the longitudinal axis Y referred to above.

Whilst, in the arrangements described above, the receptacle 50, with the air bag packed therein, is oriented so that the receptacle opening (normally closed by the lid 52) and the central region 30 of the air bag, face upwardly, the receptacle 50 and the packed air bag may be oriented to face partially or wholly rearwardly towards the vehicle windscreen, (for example partially upwardly and partially rearwardly), i.e. so that the receptacle or housing with the air bag packed therein is tilted anti-clockwise from the position shown in Figure 1 through an angle of up to 90°, for example between 5° and 7°. Alternatively, the packed air bag may be tilted rearward relative to its housing or receptacle, from the position shown in Figure 1, so that the central region of the packed bag, described as being uppermost in the above description with reference to Figures 4 to 6E faces rearwardly towards the vehicle windscreen or faces at an angle partly rearwardly and partly upwardly. The housing or receptacle may, in such an arrangement, also be tilted rearwardly to some extent so that its opening also faces rearwardly and upwardly at an angle with respect to the vertical. However, it is not envisaged that the combined tilt of the packed air bag with respect to its receptacle and of the receptacle with respect to the vehicle will tilt the air bag 12 through more than 90° from the position shown in Figures 1 and 2. A rearward orientation of the housing, such as described above, and air bag reduces the risk of the air bag becoming stuck beneath the vehicle bonnet during deployment. It will be understood, of course, that the receptacle 50 itself need not be of the form illustrated in Figures 1, 2 and 4 but be specifically adapted for the direction in which the air bag will be deployed when the inflator is operated.

The bag described above with reference to the drawings provides the advantages that it can be packed into a narrow module in the stored condition of the bag, whilst still ensuring a good behaviour of the air bag when inflated. Furthermore, as noted above, only a single air bag with a single actuator, etc. is required.

Whilst, in the embodiments described with reference to the drawings, the vehicle bonnet has been described as being pivoted at a forward end for swinging forwardly and upwardly from the rear for access to the engine compartment, it will be appreciated that the present invention is also applicable to vehicles in which the bonnet is pivoted on hinges, for example at a rearward end of the bonnet, for swinging rearwardly and upwardly from the front for normal access to the engine compartment, this being the normal arrangement in many motor vehicles. In such cases, by way of example, the hinges at the rearward end of the bonnet may be configured so that, in a frontal impact situation, the normal hinged attachment of the rear end of the bonnet to the adjacent part of the vehicle is released, either under the control of a sensor operating a release mechanism or by the force of the inflating air bag under the rear end of the bonnet, the catch or the like mechanism at the front of the bonnet by which the bonnet, in such cases, is normally held down, being arranged so as to provide a pivot or an effective pivot at the front of the bonnet, in such a frontal impact situation. Thus, such an effective pivot at the front of the bonnet may be provided simply by a metal part, such as a metal plate or bar, which bends to allow the bonnet to swing upwardly and forwardly to the desired extent in such frontal impact situation, or an auxiliary hinge arrangement may be provided at the front of the bonnet. Accordingly, references in this description and in the claims to the bonnet being pivoted at a forward end for pivoting upwardly and rearwardly are intended to include arrangements of the kind noted in which the bonnet is arranged, in normal, non-impact circumstances, to be pivoted upwardly and rearwardly about a hinge arrangement at the rear of the bonnet.

## Claims

1. A pedestrian-protecting air bag arrangement for a motor vehicle having a bonnet (10) pivoted at a forward end for pivoting upwardly and forwardly, the vehicle having a windscreen (16) behind the bonnet, the arrangement comprising an air bag (12) located beneath the bonnet adjacent a rear end thereof, and substantially mid-way between the vehicle sides, the air bag in its deployed state being elongate transversely and extending across the width of the vehicle bonnet and upwardly over at least part of the height of the windscreen, the air bag comprising a central region (30) with an inlet portion (37) secured to an inflator (34) via an inlet and lateral regions or wings (18) which in said deployed state extend from said central region on either side of said central region and wherein, in the pre-deployed, stowed state, the air bag is packed in a supporting housing or receptacle (50) having a wall adjacent which said inlet and inflator lie and having an opening opposite said wall, **characterized in that** the lateral regions or wings (18) of the air bag are folded or rolled towards the central region, to lie between said central region (30) of the air bag and said wall whereby, when the air bag is inflated, the folded lateral regions of the air bag lying between said central region and said wall are initially held between the inflating central region and said wall of the housing or receptacle, and/or the inflator, and said rolled or folded lateral regions are thereby temporarily prevented from inflating but are displaced out of said housing or receptacle as the central region of the bag inflates, allowing the lateral regions also to inflate to extend over the windscreen.

2. An air bag arrangement according to Claim 1 wherein said supporting housing or receptacle (50) has a base wall forming said wall adjacent which said inlet and inflator (34) lie, and has a side wall extending from the base wall to define a compartment having an opening opposite the base, optionally closable by a detachable lid.

3. An air bag arrangement according to Claim 2 wherein each lateral region or wing (18) is rolled or folded in such a way that a surface of the part of the lateral region which faces upwardly and forwardly in the deployed condition of the air bag (12) and which in the deployed condition is immediately adjacent the outer surface of the central region (30) lies furthest away from said central region and nearest said base of the housing or receptacle in the packed or stowed condition of the air bag with further portions of the rolled or folded lateral region lying between the first mentioned part of the lateral region and the central region of the air bag.

4. An air bag arrangement according to any of Claims 1 to 3 wherein the vehicle has "A" pillars (14) on either side of said windscreen and wherein said lateral regions of the air bag include respective extreme lateral parts (36, 38) of increased depth configured to extend over said "A" pillars in the inflated, deployed condition of the air bag.

5. A method of folding and stowing a pedestrian air bag according to any preceding claim in which, starting from an extended un-inflated condition of the air bag (12), the air bag is first folded or rolled about an axis (Y-Y) extending longitudinally of the air bag and which will extend transversely of the vehicle in which the air bag is to be fitted, in such a way that said inlet portion remains exposed, whereby the extent of the air bag perpendicular to said longitudinal axis of the air bag is narrowed, and thereafter each of the thus rolled or folded lateral regions is further rolled or folded about an axis or axes (A-A) extending perpendicular to said longitudinal axis of the bag in such a way as to bring said rolled or folded lateral regions (18) to lie in superimposed relationship with said central region (30), on either side of the inlet.

6. A method according to Claim 5 wherein the rolling or folding of each said lateral region (18) about said axis or axes (A-A) perpendicular to said longitudinal axis (Y-Y) of the bag (12) is such as to form the lateral regions into a spiral form, optionally a flattened spiral form, in which parts (36, 38) of the lateral region (18) which are further from said central region (30) in the deployed state of the bag are nearer to the middle of the spiral and parts which are nearer to said central region (30) in the deployed state of the bag are further from the middle of the spiral.

7. A motor vehicle having a bonnet (10) pivoted at a forward end for pivoting upwardly and forwardly, the vehicle having a windscreen (16) behind the bonnet, the vehicle being fitted with a pedestrian air bag arrangement according to any of Claims 1 to 4 beneath the bonnet.

8. A motor vehicle according to Claim 7 wherein the vehicle bonnet is mounted for pivoting at a rearward end, about a rear hinge arrangement, in normal, non-accident circumstances and to be retained in a closed position by a catch arrangement at the front of the bonnet, but is so mounted as to be released from its pivotal mounting at its rearward end in a frontal impact situation, for pivoting about a front part of the bonnet.

9. A motor vehicle according to Claim 7 or Claim 8 wherein, in the pre-deployed, stowed state, said central region (30) of the stowed bag faces in a direction with at least a component directed upwards towards the underside of the bonnet (10).

10. A motor vehicle according to Claim 7, 8 or 9 wherein, in the pre-deployed, stowed state, said central region (30) of the stowed bag faces in a direction with at least a component directed rearwardly and towards the vehicle windscreen (16).

11. A motor vehicle according to any of Claims 7 to 10 wherein said housing or receptacle (50), with the air bag packed therein, is oriented so that said opening of the housing or receptacle faces in a direction with at least a component directed upwardly toward the underside of the bonnet (10).

12. A motor vehicle according to any of Claims 7 to 11 wherein said housing or receptacle (50), with the air bag packed therein, is orientated so that said opening of the housing or receptacle faces in a direction having at least a component directed towards the rear of the vehicle and thus towards the windscreen (16).

13. A motor vehicle according to any of Claims 7 to 11 wherein said housing or receptacle (50), with the air bag packed therein, is oriented so that said opening of the housing or receptacle faces in a direction with at least a component directed upwardly toward the underside of the bonnet (10) and a component directed rearwardly and towards the vehicle windscreen (16).

## Patentansprüche

1. Airbaganordnung zum Schutz von Fußgängern für ein Kraftfahrzeug mit einer Motorhaube (10), die an einem vorderen Ende zum Aufwärts- und Vorwärtsschwenken gelenkig verbunden ist, wobei das Fahrzeug eine Windschutzscheibe (16) hinter der Motorhaube aufweist, die Anordnung einen Airbag (12) umfasst, der sich unter der Motorhaube neben einem hinteren Ende derselben und im Wesentlichen auf halbem Weg zwischen den Fahrzeugseiten befindet, der Airbag in seinem Einsatzzustand länglich schräg ist und sich quer über die Breite der Fahrzeugmotorhaube und aufwärts über zumindest einen Teil der Höhe der Windschutzscheibe erstreckt, wobei der Airbag einen mittleren Bereich (30) mit einem Einlassabschnitt (37) umfasst, der an einer Aufblaseinrichtung (34) über einen Einlass gesichert ist, und seitliche Bereiche oder Flügel (18) umfasst, die im Einsatzzustand von dem mittleren Bereich zu beiden Seiten des mittleren Bereichs verlaufen, und wobei der Airbag im verstauten Zustand vor dem Einsatz in einem Lagergehäuse oder einem Lageraufnahmebehälter (50) verpackt ist, der eine Wand aufweist, neben der der Einlass und die Aufblaseinrichtung liegen, und eine Öffnung gegenüber der Wand aufweist, **dadurch gekennzeichnet, dass** seitliche Bereiche oder Flügel (18) des Airbags gefaltet oder zum mittleren Bereich hin gerollt sind, so dass sie zwischen dem mittleren Bereich (30) des Airbags und der Wand liegen, wodurch, wenn der Airbag aufgeblasen wird, die gefalteten seitlichen Bereiche des Airbags, die zwischen dem mittleren Beriech und der Wand liegen, anfänglich zwischen dem aufgeblasen werdenden mittleren Bereich und der Wand des Gehäuses oder Aufnahmebehälters und/oder der Aufblaseinrichtung gehalten werden und dadurch vorübergehend verhindert wird, dass die gerollten oder gefalteten seitlichen Bereiche aufgeblasen werden, sondern aus dem Gehäuse oder Aufnahmebehälter verschoben werden, wenn der mittlere Bereich des Airbags aufgeblasen wird, was es den seitlichen Bereichen erlaubt, ebenfalls aufgeblasen zu werden, um sich über die Windschutzscheibe zu erstrecken.

2. Airbaganordnung nach Anspruch 1, wobei das Lagergehäuse oder der Lageraufnahmebehälter (50) eine Basiswand aufweist, die die Wand bildet, neben der der Einlass und die Aufblaseinrichtung (34) liegen, und eine Seitenwand aufweist, die sich von der Basiswand erstreckt, um einen Abschnitt zu begrenzen, der eine Öffnung gegenüber der Basis hat, die gegebenenfalls durch einen abnehmbaren Deckel verschlossen werden kann.

3. Airbagvorrichtung nach Anspruch 2, wobei jeder seitliche Bereich oder Flügel (18) so gerollt oder gefaltet ist, dass eine Oberfläche des Teils des seitlichen Bereichs, der im Einsatzzustand des Airbags (12) aufwärts und vorwärts gewandt ist, und der sich im Einsatzzustand unmittelbar neben der Außenfläche des mittleren Bereichs (30) befindet, von dem mittleren Bereich am weitesten entfernt und nächst der Basis des Gehäuses oder Aufnahmebehälters im verpackten oder verstauten Zustand des Airbags befindet, wobei weitere Abschnitte des gerollten oder gefalteten seitlichen Bereichs zwischen dem erstgenannten Teil des seitlichen Bereichs und dem mittleren Bereich des Airbags liegen.

4. Airbagvorrichtung nach irgendeinem der Ansprüche 1 bis 3, wobei das Fahrzeug "A"-Säulen (14) zu beiden Seiten der Windschutzscheibe aufweist und wobei die seitlichen Bereiche des Airbags jeweilige äußerste seitliche Bereiche (36, 38) von vergrößerter Tiefe einschließen, die dazu konfiguriert sind, sich im aufgeblasenen Einsatzzustand des Airbags über die "A"-Säulen zu erstrecken.

5. Verfahren zum Falten und Verstauen eines Fußgänger-Airbags nach irgendeinem vorhergehenden Anspruch, bei dem der Airbag, beginnend von einem erstreckten nicht-aufgeblasenen Zustand des Airbags (12), zunächst um eine Achse (Y-Y) gefaltet oder gerollt wird, die sich längs des Airbags erstreckt und sich quer über das Fahrzeug erstrecken wird, in dem der Airbag eingebaut werden soll, und zwar so, dass der Einlassabschnitt freigelegt bleibt, wodurch das Ausmaß des Airbags senkrecht zur Längsachse des Airbags verschmälert ist, und danach wird jeder der so gerollten oder gefalteten seitlichen Bereiche weiter um eine Achse oder Achsen (A-A) gerollt oder gefaltet, die sich senkrecht zur Längsachse des Airbags so erstrecken, dass bewirkt wird, dass die gerollten oder gefalteten seitlichen Bereiche (18) in überlagerter Beziehung mit dem mittleren Bereich (30) zu beiden Seiten des Einlasses liegen.

6. Verfahren nach Anspruch 5, wobei das Rollen oder Falten jedes seitlichen Bereichs (18) um die Achse oder Achsen (A-A) senkrecht zur Längsachse (Y-Y) des Airbags (12) dergestalt ist, dass die seitlichen Bereiche zu einer Spiralform, gegebenenfalls einer abgeflachten Spiralform, geformt werden, in der Teile (36, 38) des seitlichen Bereichs (18), die von dem mittleren Bereich (30) weiter entfernt sind, im Einsatzzustand des Airbags näher an der Mitte der Spirale sind, und Teile, die näher am mittleren Bereich (30) sind, im Einsatzzustand des Airbags weiter von der Mitte der Spirale entfernt sind.

7. Kraftfahrzeug mit einer Motorhaube (10), die an einem vorderen Ende zum Aufwärts- und Vorwärtschwenken gelenkig verbunden ist, wobei das Fahrzeug eine Windschutzscheibe (16) hinter der Motorhaube aufweist und das Fahrzeug mit einer Fußgänger-Airbaganordnung gemäß irgendeinem der Ansprüche 1 bis 4 unter der Motorhaube ausgestattet ist.

8. Kraftfahrzeug nach Anspruch 7, wobei die Fahrzeugmotorhaube zum Schwenken an einem rückwärtigen Ende um eine rückwärtige Drehgelenkanordnung in normalen Nicht-Unfallumständen, und um in einer geschlossenen Position durch eine Einrastanordnung vorne an der Motorhaube festgehalten zu werden, angebracht ist, aber so angebracht ist, dass sie aus ihrer Schwenkanbringung an ihrem rückwärtigen Ende in einer Frontalaufprallsituation zum Schwenken um einen Vorderteil der Motorhaube freigegeben wird.

9. Kraftfahrzeug nach Anspruch 7 oder Anspruch 8, wobei der mittlere Bereich (30) des verstauten Airbags im verstauten Zustand vor dem Einsatz in eine Richtung gewandt ist, wobei zumindest eine Komponente aufwärts zur Unterseite der Motorhaube (10) hin gerichtet ist.

10. Kraftfahrzeug nach Anspruch 7, 8 oder 9, wobei der mittlere Bereich (30) des verstauten Airbags im verstauten Zustand vor dem Einsatz in eine Richtung gewandt ist, wobei zumindest eine Komponente nach hinten und zur Fahrzeugwindschutzscheibe (16) hin gerichtet ist.

11. Kraftfahrzeug nach irgendeinem der Ansprüche 7 bis 10, wobei das Gehäuse oder der Aufnahmebehälter (50) mit dem darin eingepackten Airbag so ausgerichtet ist, dass die Öffnung des Gehäuses oder des Aufnahmebehälters in eine Richtung gewandt ist, wobei zumindest eine Komponente aufwärts zur Unterseite der Motorhaube (10) hin gerichtet ist.

12. Kraftfahrzeug nach irgendeinem der Ansprüche 7 bis 11, wobei das Gehäuse oder der Aufnahmebehälter (50) mit dem darin eingepackten Airbag so ausgerichtet ist, dass die Öffnung des Gehäuses oder des Aufnahmebehälters in eine Richtung gewandt ist und zumindest eine Komponente aufweist, die zur Rückseite des Fahrzeugs und somit zur Windschutzscheibe (16) hin gerichtet ist.

13. Kraftfahrzeug nach irgendeinem der Ansprüche 7 bis 11, wobei das Gehäuse oder der Aufnahmebehälter (50) mit dem darin eingepackten Airbag so ausgerichtet ist, dass die Öffnung des Gehäuses oder des Aufnahmebehälters in eine Richtung gewandt ist, wobei zumindest eine Komponente aufwärts zur Unterseite der Motorhaube (10) hin und eine Komponente nach hinten und zur Fahrzeugwindschutzscheibe (16) hin gerichtet ist.

## Revendications

1. Un dispositif de coussin de sécurité gonflable de protection des piétons, pour un véhicule à moteur présentant un capot (10), dont une extrémité avant est pivotante pour un pivotement vers le haut et vers l'avant, le véhicule ayant un pare-brise (16) derrière le capot, le dispositif comprenant un coussin de sécurité gonflable (12) situé sous le capot, adjacent à une extrémité arrière de celui-ci et pour l'essentiel à mi-chemin entre les côtés du véhicule, le coussin de sécurité gonflable étant conçu pour, dans son état déployé, s'allonger transversalement et s'étendre sur toute la largeur du capot du véhicule et vers le haut sur au moins une partie de la hauteur du pare-brise, le coussin de sécurité gonflable incluant une région centrale (30) avec une partie d'admission (37) fixée à un dispositif de gonflage (34) via une admission et des régions ou ailes latérales (18) qui, à l'état déployé, partent de ladite région centrale de chaque côté de ladite région centrale et dans lequel, à l'état prédéployé rangé, le coussin de sécurité gonflable est rangé dans un boîtier ou logement (50) ayant une paroi adjacente à l'admission et au dispositif de gonflage et ayant une ouverture opposée à ladite paroi, **se caractérisant par le fait que** les régions latérales ou ailes (18) du coussin de sécurité gonflable sont repliées ou roulées vers la région centrale, pour reposer entre la région centrale (30) du coussin de sécurité gonflable et la paroi, ce qui signifie que, lorsque le coussin de sécurité gonflable est gonflé, les régions latérales repliées du coussin de sécurité gonflable se trouvant entre la région centrale et la paroi sont initialement maintenues entre la région centrale de gonflage et la paroi du boîtier ou logement, et/ou le dispositif de gonflage, et les régions latérales roulées ou repliées ne peuvent donc temporairement pas se gonfler mais sont déplacées en dehors du boîtier ou logement lorsque la région centrale du coussin se gonfle, ce qui permet aux régions latérales de se gonfler également pour couvrir le pare-brise.

2. Un dispositif de coussin de sécurité gonflable selon la revendication 1, dans lequel le boîtier ou logement (50) possède une paroi de base formant la paroi adjacente à l'admission et au dispositif de gonflage (34) et possède une paroi latérale partant de la paroi de base pour définir un compartiment ayant une ouverture en face de la base, éventuellement fermable à l'aide d'un couvercle amovible.

3. Un dispositif de coussin de sécurité gonflable selon la revendication 2, dans lequel chaque région latérale ou aile (18) est roulée ou repliée de manière telle qu'une surface de la partie de la région latérale qui est orientée vers le haut et vers l'avant à l'état déployé du coussin de sécurité gonflable (12) et qui à l'état déployé est immédiatement adjacente à la surface extérieure de la région centrale (30) se trouve la plus éloignée de la région centrale et la plus proche de la base du boîtier ou logement à l'état rangé du coussin de sécurité gonflable, d'autres parties de la région latérale roulée ou repliée se trouvant entre la première partie mentionnée de la région latérale et la région centrale du coussin de sécurité gonflable.

4. Un dispositif de coussin de sécurité gonflable selon n'importe laquelle des revendications 1 à 3, dans lequel le véhicule est muni de montants « A » (14) de chaque côté du pare-brise et dans lequel les régions latérales du coussin de sécurité gonflable comportent des parties latérales extrêmes respectives (36, 38) de plus grande épaisseur configurées pour recouvrir les montants « A » à l'état gonflé déployé du coussin de sécurité gonflable.

5. Un procédé permettant de replier et de ranger un coussin de sécurité gonflable de protection des piétons selon n'importe laquelle des revendications précédentes, dans lequel, de son état non gonflé déployé, le coussin de sécurité gonflable (12) est tout d'abord replié ou roulé sur un axe (Y-Y) partant longitudinalement du coussin de sécurité gonflable et partant transversalement du véhicule dans lequel le coussin de sécurité gonflable doit être posé, de manière telle que la partie admission reste exposée, ce qui signifie que la partie du coussin de sécurité gonflable perpendiculaire à l'axe longitudinal du coussin de sécurité gonflable est restreinte, et chacune des régions latérales ainsi roulées ou repliées est ensuite encore roulée ou repliée sur un ou plusieurs axes (A-A) perpendiculaires à l'axe longitudinal du coussin de façon à ce que les régions latérales roulées ou repliées (18) se trouvent en relation de superposition par rapport à la région centrale (30), de chaque côté de l'admission.

6. Un procédé selon la revendication 5, dans lequel le roulage ou le pliage de chaque région latérale (18) sur le ou les axes (A-A) perpendiculaires à l'axe longitudinal (Y-Y) du coussin (12) permet de disposer les régions latérales sous forme de spirale, éventuellement sous forme de spirale aplatie, les parties (36, 38) de la région latérale (18) qui sont les plus éloignées de la région centrale (30) lorsque le coussin est à l'état déployé étant alors les plus proches du milieu de la spirale et les parties qui sont les plus proches de la région centrale (30) lorsque le coussin est à l'état déployé étant les plus éloignées du milieu de la spirale.

7. Un véhicule à moteur ayant un capot (10) dont une extrémité avant est pivotante pour un pivotement vers le haut et vers l'avant, le véhicule ayant un pare-brise (16) derrière le capot, le véhicule étant équipé d'un dispositif de coussin de sécurité gonflable pour la protection des piétons conformément à n'importe laquelle des revendications 1 à 4 sous le capot.

8. Un véhicule à moteur selon la revendication 7, dans lequel le capot du véhicule est monté de façon à pouvoir pivoter à une extrémité arrière, sur une charnière arrière, dans des circonstances normales en dehors de tout accident, et à être maintenu en position fermée par un système de cliquet à l'avant du capot, mais est monté de manière à être débloqué de son montage pivotant à son extrémité arrière en cas d'impact frontal afin de pivoter sur une partie avant du capot.

9. Un véhicule à moteur selon la revendication 7 ou 8 dans lequel, à l'état prédéployé rangé, la région centrale (30) du coussin rangé est orientée dans une direction avec au moins un composant dirigé vers le haut vers le dessous du capot (10).

10. Un véhicule à moteur selon la revendication 7, 8 ou 9 dans lequel, à l'état prédéployé rangé, la région centrale (30) du coussin rangé est orientée dans une direction avec au moins un composant dirigé vers l'arrière et vers le pare-brise du véhicule (16).

11. Un véhicule à moteur selon n'importe laquelle des revendications 7 à 10, dans lequel le boîtier ou logement (50) contenant le coussin de sécurité gonflable rangé est orienté de manière telle que l'ouverture du boîtier ou logement est orientée dans une direction avec au moins un composant dirigé vers le haut, vers le dessous du capot (10).

12. Un véhicule à moteur selon n'importe laquelle des revendications 7 à 11, dans lequel le boîtier ou logement (50) contenant le coussin de sécurité gonflable rangé est orienté de manière telle que l'ouverture du boîtier ou logement est orientée dans une direction avec au moins un composant dirigé vers l'arrière du véhicule et donc vers le pare-brise (16).

13. Un véhicule à moteur selon n'importe laquelle des revendications 7 à 11, dans lequel le boîtier ou logement (50) contenant le coussin de sécurité gonflable rangé est orienté de manière telle que l'ouverture du boîtier ou logement est orientée dans une direction avec au moins un composant dirigé vers le haut vers le dessous du capot (10) et un composant dirigé vers l'arrière et vers le pare-brise du véhicule (16).
